# EUROPÄISCHE PATENTSCHRIFT

(11) **EP 2 497 131 B1**
(45) Veröffentlichungstag und Bekanntmachung des Hinweises auf die Patenterteilung: **28.11.2018**
(21) Anmeldenummer: 10760973.7
(22) Anmeldetag: 21.09.2010
(51) Int. Cl.: H01M 2/02, H01M 10/04

(54) **BATTERIESYSTEM MIT ERHÖHTER GEHÄUSE-DURCHSTOSSFESTIGKEIT**
BATTERY SYSTEM HAVING INCREASED HOUSING PUNCTURE RESISTANCE
SYSTÈME DE BATTERIE PRÉSENTANT UNE RÉSISTANCE ACCRUE À LA PERFORATION DU BOÎTIER

(30) Priorität: 04.11.2009 DE 102009046402
(43) Veröffentlichungstag der Anmeldung: 12.09.2012
(73) Patentinhaber: Samsung SDI Co., Ltd., Gyeonggi-do (KR); Robert Bosch GmbH, 70442 Stuttgart (DE)
(72) Erfinder: WOEHRLE, Thomas, 80807 Munich (DE); KAISER, Rudi, Yongin-Si 446-913 (KR)
(74) Vertreter: Bee, Joachim
(86) Internationale Anmeldenummer: PCT/EP2010/063873
(87) Internationale Veröffentlichungsnummer: WO 2011/054587

(56) Entgegenhaltungen:
- EP-A1- 1 852 926
- DE-A1- 10 226 848
- DE-T2- 60 302 760
- JP-A- 2000 277 066
- JP-A- 2004 327 048
- US-A- 5 248 461
- US-A- 5 328 586
- US-A1- 2004 029 001
- US-A1- 2008 241 662

## Beschreibung

### Stand der Technik

An Batteriesysteme sowohl für stationäre Anwendungen (z.B. bei Windkraftanlagen) als auch für mobile Anwendungen (z.B. Hybrid- und Elektrofahrzeuge) werden sehr hohe Anforderungen bzgl. ihrer Sicherheit gestellt. So kann es z.B. bei Lithium-Ionen- oder Lithium-Ionen-Polymer-Batteriesystemen bei unsachgemäßem Gebrauch, beim Missbrauch oder auch bei einem Unfall zur unkontrollierten Öffnung eines Gehäuses oder zur Beschädigung durch ein Eindringen von Fremdkörpern kommen. Je nach Betriebszustand kann dies zu einem spontanen Abbrand oder gar zu einer Explosion führen. Besonders kritisch ist dies bei Batteriesystemen in voll geladenem Zustand.

Lithium-Ionen-Polymer-Zellen oder auch Lithium-Polymer-Zellen sind Lithiumlonen-Zellen, die als Gehäuse eine Aluminium-Verbundfolie aufweisen. Solche Zellen werden auch als Pouch-Zellen bezeichnet und basieren prinzipiell auf Lithium-Ionen-Zellchemie (Interkalation und Deinterkalation von Lithium-Ionen).

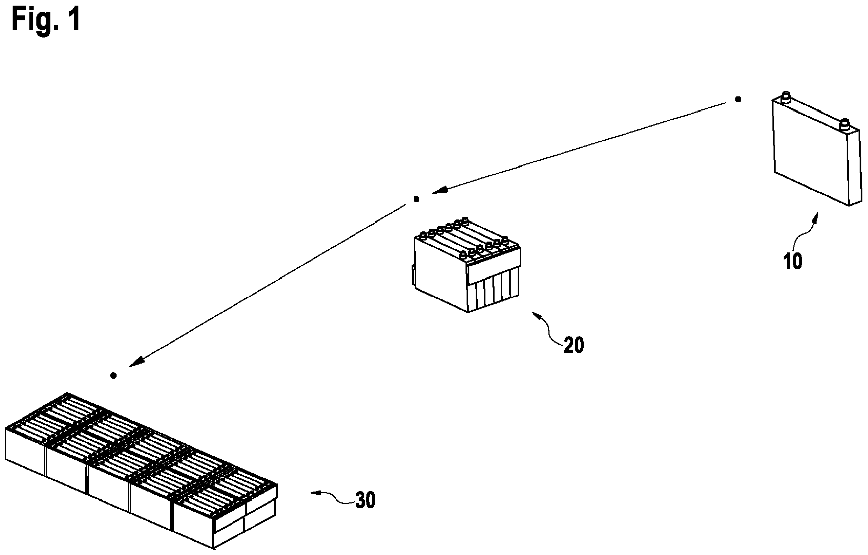

Mit dem Begriff Lithium-Ionen-System im folgenden sind hier alle aus einer Lithium-Ionen-Zelle abgeleiteten Systeme gemeint, wie eine Einzellzelle selbst, ein Modul oder ein sogenanntes Pack, siehe Figur 1.

Insbesondere die Penetration einer Lithium-Ionen-Battereriezelle beispielsweise mit spitzen Metallteilen kann bei maximalen 100%-Ladezustand (engl. state of charge, SOC) äußerst gefährlich für Mensch und Umwelt sein. Die Batteriezelle kann vor allem im geladenen Zustand durch die hohen Kurzschlussströme und die dadurch auftretenden hohen Temperaturen in einen sogenannten "thermal runaway" getrieben werden. Erläuterung für die Abläufe im Falle eines "thermal runaways" bei Lithim-Ionen-Systeme sind beschrieben in:
R. Kern; R. Bindel, R. Uhlenbrock, ATZelektronik 05I2009 Jahrgang 4, S. 22-29.

Durch das unkontrollierte Eröffnen der Batteriezellummantelung bei Lithium-Ionen-Batterien und/oder des Gehäuses des Batteriesystems können giftige Zellinhaltsstoffe oder Zersetzungsprodukte wie Phosphoroxytrifluorid (POF₃) oder Fluorwasserstoff (HF) freigesetzt werden und es kann zu Rauch- und Feuerentwicklung kommen sowie zu Explosionsereignissen.

Ein Stand der Technik für eine sicherheitsverbesserte Lithium-Ionen-Zelle ist in EP1359637 (B1) beschrieben. In EP1359637 (B1) wird ein keramischer Separator eingesetzt, der verhindert, dass die Zelle beim Anstechen des galvanischen Elementes unter Hitzeentwicklung und Entflammung vollständig verbrennt. Ein Nachteil dieses Ansatzes ist die Tatsache, dass derartige keramisch basierte Separatoren meist in einer Dicke von 75 µm und mehr appliziert werden müssen, damit der Herstellungsprozess gewährleistet werden kann. Durch die Erhöhung der Dicke des keramischen Separators (75µm) gegenüber den Polyolefin-Separatoren (ca. 25µm) erniedrigt sich die Energiedichte von Lithium-Ionen-Zellen jedoch drastisch.

Die US 2004/0029001 A1 zeigt ein Batteriepaket aufweisend ein Batteriegehäuse, das aus einer laminierten Platte, aufweisend eine Basislage, eine Metalllage und eine Harzlage, hergestellt ist.

Die US 5,248,461 A zeigt ein Verfahren zur Herstellung von mikroporösen Filmen aus ultrahochmolekularem Polyethylen, zum Beispiel für einen Separator einer Batterie.

Die DE 603 02 760 T2 zeigt ein Verfahren zum Sintern von Polyethylen mit ultrahohem Molekulargewicht, hiermit erhaltene Produkte, unter anderem einen Separator für eine Batterie, und Polyethylen mit ultrahohem Molekulargewicht aufweisende Zusammensetzungen.

Bei automotiven Lithium-Ionen- und Lithium-Ionen-Polymer-Batteriezellen oder - systemen wird daher, neben anderen sogenannten Abuse-Tests, standardmäßig ein sogenannter "nail-penetration"-Test (Nageltest) bei 100% SOC durchgeführt, um die Sicherheit von Batteriezellen und -systemen zu überprüfen.
Ein gebräuchlicher Nagel-Pentetrations-Sicherheitstest (für Lithium-Ionen-Systeme), der einen Standard in der Automobilindustrie darstellt, wird beschrieben in: SANDIA REPORT (SAND2005-3123), August 2006 nach EUCAR/USABC Abuse Test Procedures.

### Dabei gelten folgende Test-Parameter:

Durchdringung der Zelle oder des Moduls mit einem Nagel bei einer Geschwindigkeit von 8 cm/sec. Der Durchmesser des Nagels ist 3 mm für einzelne Zellen. Auf Modul- und Pack-Ebene beträgt der Durchmesser des Nagels 20 mm. Der Test gilt als bestanden, wenn nach den sogenannten EUCAR Hazard Levels eine Leckage auftritt, bei der aber weniger als 50% der Zellinhaltsstoffe emittiert werden und zudem an der Zelle oder am Modul bzw. Pack kein Entgasen, kein Feuer, keine Flamme, kein Zerreißen, sowie keine Explosion auftritt.

Die Ergebnisse in der Praxis bei Lithium-Ionen-Systemen zeigen, dass auch bei sehr sorgfältiger Auswahl der Materialien für Batteriezell- oder - systemkomponenten und durch intelligentes Batteriezell- und -systemdesign ein Teil der Batteriezellen oder -systeme diesen beschriebenen Test oft nicht besteht.

### Offenbarung der Erfindung

### Die vorliegende Erfindung stellt ein Batteriesystem mit erhöhter

Durchstossfestigkeit bereit, umfassend:
i) eine oder mehrere Batteriezellen; und
ii) eine mindestens eine Batteriezelle teilweise oder ganz umgebende durchstossfeste Schicht, wobei die durchstossfeste Schicht eine Zugfestigkeit von
   ≥ 500 N/mm² aufweist.

Die Erfindung basiert auf einer völlig neuartigen Kombination des Gehäuses von Batteriezellen oder -modulen- oder -packs und einer erfindungsgemäßen äußerst durchstossfesten Schicht. Dadurch, dass eine Batteriezelle des Batteriesystems mindestens teilweise von einer solchen durchstossfesten Schicht unmittelbar oder mittelbar umgeben ist, wird das Durchdringen einer Mantelfläche einer Batteriezelle z.B. mittels eines externen Gegenstandes extrem erschwert bzw. ganz verhindert. Die beim Auftreffen des externen Gegenstandes auf die stossfeste Schicht punktuell auftretenden Kräfte werden dabei auf eine größere Fläche verteilt, so dass der Druck auf das Batteriezell- oder Batteriesysteminnere abnimmt. Die kinetischen Kräfte des externen Gegenstandes werden, anstatt zu einer Penetration der Batteriezelle oder des Batteriesystems zu führen, in eine Deformation der Batteriezelle oder des Batteriesystems überführt. Durch eine ledigliche Deformation finden in der Regel keine spontanen Kurzschlüsse in der Batteriezelle oder dem Batteriesystem statt. Ein starker Temperaturanstieg und damit ein möglicher "thermal runaway" wird verhindert. Exotherme Reaktionen mit der Folge von Entgasen, Feuer, Flamme, Zerreißen, Explosion, Zellöffnung, und/oder Rauchentwicklung bleiben aus. Das Sicherheitsverhalten des erfindungsgemäßen Batteriesystems ist dadurch signifikant verbessert. Das vorgeschlagene Batteriesystem eignet sich sowohl für Batteriesysteme mit niedrigen Kapazitäten als auch für Batteriesysteme mit hohen Kapazitäten, wie sie im automotiven Bereich vorkommen.

Das erfindungsgemäße Batteriesystem umfasst eine oder mehrere Batteriezellen, die geeignet miteinander verschaltet sind. Unter dem Begriff "Batteriesystem" werden hier elektrochemische Energiespeicher verstanden, insbesondere Batterien oder Akkumulatoren aller gebräuchlichen Akkumulatortechnologien.

Bevorzugt sind die Zellen, Module, Batterien oder Akkumulatoren vom Typ Li-Ionen (Lithium-Ionen-), LiPo (als Lithium-Polymer oder Lithium-Ionen-Polymer bezeichnet). Die folgenden Begriffe reflektieren Beispiele für Aktivmaterialien, die in diesen Lithium-Ionen-Zellen zum Einsatz kommen: Li₂Mn₂O₄ (LMO) als Lithiummanganspinell bezeichnet; LiFePO₄ (LFP)- Lithium-Eisen-Phosphat, Li₄Ti₅O₁₂ (LiTiO) - Lithium-Titanat.

Es können auch Batterien oder Akkumulatoren vom Typ Pb - Bleiakku, NiMH - Nickel-Metallhydrid-Akkumulator eingesetzt werden.

Besonders bevorzugt werden Batteriesysteme vom Typ der Lithium-Ionen-Batterie und/oder der Lithium-Ionen-Polymer-Batterie verwendet. Mit dem Begriff Lithium-Ionen-Polymer-Zellen/Batterien/Systeme oder Lithium-Polymer-Zellen/Batterien/Systeme sind Systeme gemeint, deren Zellverpackung aus Aluminium-Verbundfolie besteht.

Der Begriff "Batteriesystem" wird sowohl für einzelne Zellen, als auch für Module aus mehreren Zellen, als auch für komplexere Architekturen umfassend mehrere Zellen und/oder Module, wie beispielsweise Batteriepacks, verwendet. Bevorzugt bezeichnet der Begriff "Batteriesystem" Energiespeicher mit mehr als einer Zelle. Das erfindungsgemäße Batteriesystem kann zusätzliche Komponenten aufweisen, z.B. zur Steuerung oder Regelung des Batterieverhaltens.

Das Batteriesystem kann zusätzlich ein oder mehrere Gehäuse umfassen zur Aufnahme einer oder mehrerer Batteriezellen, wobei die durchstossfeste Schicht innerhalb, ausserhalb oder sowohl innerhalb als auch ausserhalb des oder der Gehäuse angeordnet sein kann. Dabei kann ein Batteriesystem ein einziges oder mehrere Gehäuse aufweisen, die jeweils eine oder mehrere Batteriezellen umfassen. Bevorzugt weist das Batteriesystem ein gemeinsames Gehäuse auf, in dem alle Zellen oder Module des Batteriesystems angeordnet sind. Unter dem Begriff "Gehäuse" ist dabei eine Vorrichtung zu verstehen, die einen Innenraum aufweist, der geeignet ist, eine oder mehrere Batteriezellen aufzunehmen. Ein Gehäuse kann dabei in einer oder zwei Richtungen dauerhaft oder vorübergehend gegenüber der Umwelt offen sein. Bevorzugt grenzt das Gehäuse die enthaltenen Batteriezellen gegenüber der Umgebung nach allen Richtungen hin vollständig ab, wobei das Gehäuse verschließbare Zugänge, wie z.B. Türen oder Deckel aufweisen kann. Unter einem Gehäuse kann nicht der unmittelbare Zellmantel verstanden werden, der die elektrochemischen Bestandteile einer einzelnen Zelle unmittelbar von der Umwelt trennt. Bevorzugt kann das Gehäuse aus einem Material gefertigt sein, welches ein Metall, ein Metallblech oder eine Keramik umfasst oder daraus besteht. Besonders bevorzugt kann das Gehäuse aus einem Material gefertigt sein, welches Aluminium aufweist oder daraus besteht.

Das erfindungsgemäße Batteriesystem weist eine stossfeste Schicht auf, die ein Durchstossen mittels externer Gegenstände vermeiden soll. Dazu weist die stossfeste Schicht eine möglichst hohe Zugfestigkeit auf. Die stossfeste Schicht weist eine Zugfestigkeit von ≥ 500 N/mm² auf, bevorzugt von ≥ 1000 N/mm², besonders bevorzugt von ≥ 2000 N/mm², ganz besonders bevorzugt von ≥ 2500 N/mm². Dabei gibt die Zugfestigkeit die Spannung an, die im Zugversuch aus der maximal erreichten Zugkraft bezogen auf den ursprünglichen Querschnitt der Probe errechnet wird.

Um möglichst große Kräfte absorbieren zu können ohne diese an die Batteriezelle weiterzugeben, weist die stossfeste Schicht ein möglichst hohes Elastizitätsmodul auf. Bevorzugt weist die stossfeste Schicht ein Elastizitätsmodul auf von
≥ 25 kN/mm², bevorzugt von ≥ 50 kN/mm², besonders bevorzugt von ≥ 100 kN/mm², ganz besonders bevorzugt liegt der Elastizitätsmodul in einem Bereich von 100 bis 180 kN/mm². Dabei ist der Elastizitätsmodul als Steigung des Graphen im Spannungs-Dehnungs-Diagramm bei einachsiger Belastung innerhalb des linearen Elastizitätsbereichs definiert.

Um das Gewicht des erfindungsgemäßen Batteriesystems so gering wie möglich zu halten, was insbesondere bei mobilen Anwendungen gewünscht und von Vorteil ist, kann die stossfeste Schicht möglichst wenig Gewicht aufweisen. Die stossfeste Schicht kann insbesondere eine Flächendichte aufweisen von ≤ 5 kg/m², bevorzugt von ≤ 3 kg/m², besonders bevorzugt von ≤ 1 kg/m², ganz besonders bevorzugt von ≤ 0,5 kg/m².

Je dünner die Schichtdicke der stossfesten Schicht ausgebildet ist, desto leichter ist das erfindungsgemäße Batteriesystem. Die stossfeste Schicht kann eine durchschnittliche Schichtdicke aufweisen von 0,001 mm bis 10 mm, bevorzugt von 0,01 mm bis 5 mm.

Batteriesysteme werden regelmäßig in Temperaturbereichen betrieben, in denen die verwendeten Batteriezellen mindestens noch zufriedenstellend funktionieren. Dieser Temperaturbereich hängt vom verwendeten Zelltyp und von der Batteriedimensionierung ab, kann aber in bestimmten Fällen auch oberhalb von 50°C liegen. Das erfindungsgemäße Batteriesystem weist daher bevorzugt eine stossfeste Schicht auf, die mindestens beständig ist gegen Temperaturen von bis zu 100°C, bevorzugt mindestens beständig gegen Temperaturen von bis zu 200°C, besonders bevorzugt mindestens beständig gegen Temperaturen von ≤ 350°C. Beständigkeit bedeutet in diesem Zusammenhang, dass die stossfeste Schicht bei diesen Temperaturen noch nicht schmilzt. Material, welches mindestens beständig ist gegen Temperaturen von bis zu 100°C, umfasst dabei auch solches Material, das beständig ist gegen Temperaturen die höher sind als 100°C.

Die stossfeste Schicht kann teilweise oder ganz in Form einer Folie, in Form von Fasern, einem Gewebe oder einem Verbundwerkstoff vorliegen. Unter einem Verbundwerkstoff wird dabei ein Werkstoff verstanden, der aus der Verbindung von mindestens zwei verschiedenen Materialien besteht. Bevorzugte Verbundwerkstoffe umfassen ein Gewebe bzw. Fasern und ein Harz oder Polymer.

Die stossfeste Schicht kann als eigenständiges Bauteil realisiert sein z.B. als separate Folie oder Gewebe, welche nicht dauerhaft mit einem anderen Bauteil verbunden ist, oder dauerhaft mit einem anderen Bauteil verbunden vorliegen z.B. an der Aussenseite einer Manteloberfläche einer Batteriezelle oder an der Innenfläche eines Gehäuses auf- oder angebracht sein.

Die stossfeste Schicht umfasst erfindungsgemäß ein Material welches ein oder mehrere Aramide, poly(p-phenylene-2,6-benzobisoxazole) oder Polyethylen-Polymere mit ≥ 100.000 Ethylen-Gruppen enthält oder daraus besteht.

Überraschenderweise sind diese Materialien auch im Inneren der Zelle stabil und funktional. Eine Reaktion der Aramide mit zum Beispiel der Elektrolytkomponente war a priori nicht auszuschliessen gewesen.

Unter Aramiden werden solche Polyamide verstanden, bei denen mindestens 85% der Amidgruppen direkt an zwei aromatische Ringe gebunden ist. Bevorzugte Aramide stammen aus zwei unterschiedlichen Gruppen von Aramiden, den meta-Aramiden, den para-Aramiden oder auch Poly(p-phenyleneterephthalamide) (PPTA) und den para-Aramide-Copolymeren. Bekannte Aramidfasern werden vertrieben unter den Markennamen: i) meta-Aramide: Nomex® (DuPont), Teijinconex® (Teijin); ii) para-Aramide: Tawron® (Teijin), Kevlar® (DuPont); iii) para-Aramide-Copolymere: Technora® (Teijin).

Poly(p-phenylene-2,6-benzobisoxazole)-Fasern und Gewebe sind bekannt unter dem Markennamen Zylon® (Toyobo).

Polyethylen (PE)-Polymere mit ≥ 100.000 Ethylen-Gruppen sind auch bekannt unter den englischen Bezeichnungen: ultra high molecular weight polyethylene (UHMWPE), high-modulus polyethylene (HMPE) oder high-performance polyethylene (HPPE). Eine bekannte Faser aus einem solchen PE-Polymer wird vertrieben unter dem Markennamen Dyneema® (Royal DSM).

Besonders bevorzugte Materialien und Zusammensetzungen zur Bildung der stossfesten Schicht in einem erfindungsgemäßen Batteriesystem sind in WO 04/074761, EP1 139 807 B1, US 5, 185, 195 und US 5,578,358 beschrieben.

Im erfindungsgemäßen Batteriesystem umgibt die stossfeste Schicht eine, mehrere oder alle Batteriezellen des Batteriesystems teilweise oder ganz. Dabei kann die stossfeste Schicht unmittelbar auf einer, mehreren oder allen Mantelflächen einer, mehrerer oder aller Batteriezellen aufgebracht sein. Die stossfeste Schicht kann aber auch eine Mehrzahl von Batteriezellen eines Moduls oder eines Batteriesystems oder alle Batteriezellen eines Batteriesystems gemeinsam umgeben. In diesem Fall werden eine, mehrere oder alle Batteriezellen eines Batteriesystems mittelbar von der stossfesten Schicht teilweise oder ganz umgeben. Unter einem teilweisen Umgeben wird dabei eine Anordnung verstanden, bei der nicht die ganze Oberfläche einer, mehrerer oder aller Batteriezellen eines Batteriesystems von der stossfesten Schicht mittelbar oder unmittelbar umgeben ist. Eine teilweise Umgebung liegt beispielsweise dann vor, wenn eine Kopf- und/oder Bodenfläche einer, mehrerer oder aller Batteriezellen frei bzw. unbedeckt bleibt. Eine Batteriezelle ist dann ganz von der stossfesten Schicht umgeben, wenn die gesamte Oberfläche der Batteriezelle gegen die das Batteriesystem umgebende Umwelt mittelbar oder unmittelbar durch die stossfeste Schicht abgegrenzt ist.

Im erfindungsgemäßen Batteriesystem kann die stossfeste Schicht auf verschiedene Weise angeordnet sein, vorausgesetzt die stossfeste Schicht umgibt mittelbar oder unmittelbar mindestens eine Batteriezelle teilweise oder ganz. Beispielsweise kann die stossfeste Schicht jede Batteriezelle des Batteriesystems einzeln umgeben oder die stossfeste Schicht kann zusammen eine Mehrzahl von Batteriezellen z.B. ein Batteriezellmodul umgeben oder die stossfeste Schicht kann alle Batteriezellen des Batteriesystems gemeinsam umgeben. Von der vorliegenden Erfindung sind auch alle Kombinationen der oben genannten und unten beispielhaft vorgestellten Anordnungen umfasst. Beispielsweise kann in einem erfindungsgemäßen Batteriesystem die stossfeste Schicht jede Batteriezelle einzeln umgeben. Zusätzlich oder alternativ dazu kann die stossfeste Schicht auch Module oder Gruppen von Batteriezellen als zusammengefasste Einheit einzeln umgeben. Zusätzlich oder alternativ dazu kann die stossfeste Schicht auch alle Batteriezellen, Gruppen von Batteriezellen oder Module eines Batteriesystems gemeinsam als zusammengefasste Einheit umgeben. Die endgültige Anordnung und Positionierung der stossfesten Schicht in dem erfindungsgemäßen Batteriesystem ist grundsätzlich frei wählbar und kann von der örtlichen Lage des Gefahrenpotentials für das Batteriesystem abhängig gewählt werden. Das erfindungsgemäße Batteriesystem ist grundsätzlich nicht auf eine bestimmte Dimensionierung und/oder ein bestimmtes Design der verwendeten Batteriezellen beschränkt. Es können unterschiedliche Typen verwendet werden, wie beispielsweise prismatische, zylindrische und/oder Pouch-Zellen enthaltende Batteriesysteme.

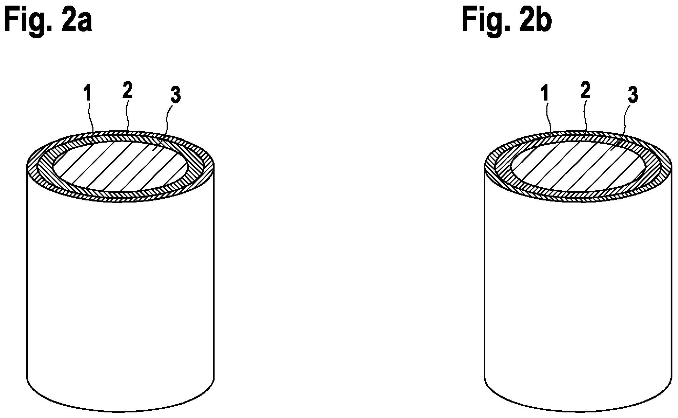

In Figur 2 ist eine erste Anordnung der stossfesten Schicht im erfindungsgemäßen Batteriesystem schematisch dargestellt. Dabei ist gezeigt, wie eine stossfeste Schicht 1 eine Batteriezelle 3 teilweise umgibt. Wie in Figur 2(a) gezeigt, kann die stossfeste Schicht 1 zwischen Batteriezelle 3 und Gehäuse 2 angeordnet sein und die Batteriezelle 3 dabei mittelbar oder unmittelbar umgeben. Wie in Figur 2(b) gezeigt, kann die stossfeste Schicht 1 auch aussen, um das Gehäuse 2 herum angebracht sein und dabei die Batteriezelle 2 mittelbar umgeben.

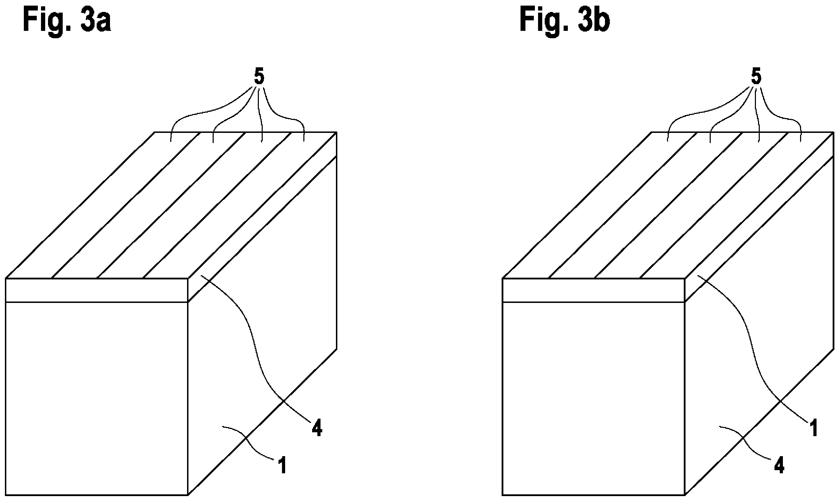

In Figur 3 ist eine zweite Anordnung der stossfesten Schicht im erfindungsgemäßen Batteriesystem schematisch dargestellt. Dabei ist eine Anordnung gezeigt, bei der eine Mehrzahl an Batteriezellen 5 zu einem Modul zusammengefasst sind und dieses Modul mittelbar oder unmittelbar von einer stossfesten Schicht 1 teilweise umgeben ist. In Figur 3(b) ist dargestellt, wie die stossfeste Schicht 1 zwischen Modul und einem das Modul umgebenden Gehäuse 4 angeordnet ist und die Batteriezellen 5 dabei mittelbar oder unmittelbar umgibt. Wie in Figur 3(a) gezeigt kann die stossfeste Schicht 1 auch aussen, um das Gehäuse 4 des Moduls herum angebracht sein und dabei die Batteriezellen 5 des Moduls mittelbar umgeben.

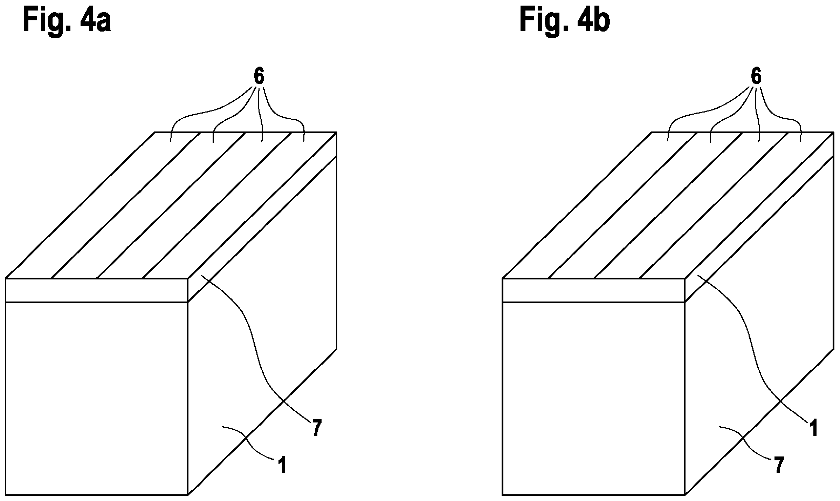

In Figur 4 ist eine dritte Anordnung der stossfesten Schicht im erfindungsgemäßen Batteriesystem schematisch dargestellt. Bei dieser Anordnung wird ein Batteriepack, ein Verbund von mehreren Modulen 6, teilweise mit einer stossfesten Schicht 1 umgeben. Wie in Figur 4(a) gezeigt kann die stossfeste Schicht 1 auch hier aussen auf einem das Batteriepack umgebenden Gehäuse 7 angeordnet sein und die Module 6 des Packs damit mittelbar umgeben. In Figur 4(b) ist dargestellt, wie die stossfeste Schicht 1 zwischen Batteriepack und einem das Batteriepack umgebenden Gehäuse 7 angeordnet ist und die Module 6 dabei mittelbar oder unmittelbar umgibt.

Die vorliegende Erfindung bezieht sich auch auf Kraftfahrzeuge, die ein erfindungsgemäßes Batteriesystem umfassen. Dabei sind unter dem Begriff "Kraftfahrzeug" alle angetriebenen Fahrzeuge zu verstehen, die einen elektrochemischen Energiespeicher aufweisen, unabhängig davon welchen Antrieb diese Kraftfahrzeuge aufweisen. Insbesondere umfasst der Begriff "Kraftfahrzeug" HEV (elektrische Hybridfahrzeuge), PHEV (Plug-In-Hybridfahrzeuge), EV (Elektrofahrzeuge), Brennstoffzellenfahrzeuge, sowie alle Fahrzeuge, die einen elektrochemischen Energiespeicher für die elektrische Energieversorgung einsetzen.

### Beispiel:

Es wird eine handelsübliche Lithium-Ionen-Polymer Zelle der Fa. Kokam verwendet, wobei es sich um eine handelsübliche und frei am Markt erhältliche Kokam - Lithium-Ionen-Polymer-Zellen (4000mAh) handelt. Laut Datenblatt des koreanischen Zellherstellers Kokam handelt es sich um sogenannte Pouch-Zellen, auch als Softpacks bezeichnet. Das aktive Kathodenmaterial besteht aus einem Blend von Lithium-Nickel-Cobalt-Mangan-Oxid (NCM) und Lithium-Cobalt-Oxid (LiCoO₂). Die Lithium-Ionen-Polymer Zelle wird mit der erfindungsgemässen durchstossfesten Folie von aussen konfektioniert. Für den weiteren Versuch als Referenz wird die originale unkonfektionierte handelsübliche Lithium-Ionen-Zelle der Fa. Kokam verwendet. Ein Los von jeweils 5 erfindungsgemässen und Referenz Zellen wird jeweils voll geladen (100% SOC, 4,2V) und dem beschriebenen Nageltest gemäss SANDIA REPORT (SAND2005-3123), August 2006 nach EUCAR/USABC Abuse Test Procedures unterworfen.
Ergebnis: die Referenzzellen brennen vollständig unter starker Hitzeentwicklung ab. Alle erfindungsgemässen Zellen bestehen den Test nach den bereits beschriebenen Vorgaben.

Figuren:
- FIG. 1: zeigt eine schematische Darstellung der Ableitung von Lithium-Ionen-Zellen 10 zu den grösseren Einheiten Lithium-Ionen-Modul 20 und Lithium-Ionen-Pack bzw. Lithium-Ionen-Batterie 30.
- FIG. 2: zeigt schematisch eine erste Anordnung einer stossfesten Schicht in einem erfindungsgemäßen Batteriesystem, wobei in (a) eine Anordnung zwischen Batteriezelle und Gehäuse gezeigt ist und in (b) eine Anordnung, bei der die stossfeste Schicht aussen auf dem Gehäuse angebracht ist.
- FIG. 3: zeigt schematisch eine zweite Anordnung einer stossfesten Schicht in einem erfindungsgemäßen Batteriesystem, wobei in (a) eine Anordnung gezeigt ist, bei der die stossfeste Schicht aussen auf dem Gehäuse angebracht ist und in (b) eine Anordnung, bei der die stossfeste Schicht zwischen Batteriemodul und Gehäuse positioniert ist.
- FIG. 4: zeigt schematisch eine dritte Anordnung einer stossfesten Schicht in einem erfindungsgemäßen Batteriesystem, wobei in (a) eine Anordnung gezeigt ist, bei der die stossfeste Schicht aussen auf dem Gehäuse angebracht ist und in (b) eine Anordnung, bei der die stossfeste Schicht zwischen Batteriepack und Gehäuse positioniert ist.

## Patentansprüche

1. Batteriesystem mit erhöhter Durchstoßfestigkeit, umfassend:
i) eine oder mehrere Batteriezellen; und
ii) eine mindestens eine Batteriezelle teilweise oder ganz umgebende durchstoßfeste Schicht,
**dadurch gekennzeichnet,**
**dass** die durchstoßfeste Schicht Aramide und/oder Polyethylen-Polymere mit ≥ 100.000 Ethylen-Gruppen enthält oder daraus besteht,
wobei die durchstoßfeste Schicht eine Zugfestigkeit von ≥ 500 N/mm² aufweist.

2. Batteriesystem nach Anspruch 1, **dadurch gekennzeichnet, dass** die durchstoßfeste Schicht eine, mehrere oder alle Batteriezellen des Batteriesystems teilweise oder ganz umgibt.

3. Batteriesystem nach einem der vorhergehenden Ansprüche, **dadurch gekennzeichnet, dass** das Batteriesystem ein oder mehrere Gehäuse zur Aufnahme einer oder mehrerer Batteriezellen aufweist, wobei die durchstoßfeste Schicht innerhalb, außerhalb oder sowohl innerhalb als auch außerhalb des oder der Gehäuse angeordnet ist.

4. Batteriesystem nach einem der vorhergehenden Ansprüche, **dadurch gekennzeichnet, dass** die durchstoßfeste Schicht ein Elastizitätsmodul aufweist von ≥ 25 kN/mm².

5. Batteriesystem nach einem der vorhergehenden Ansprüche, **dadurch gekennzeichnet, dass** die durchstoßfeste Schicht eine Flächendichte aufweist von ≤ 5 kg/m².

6. Batteriesystem nach einem der vorhergehenden Ansprüche, **dadurch gekennzeichnet, dass** die durchstoßfeste Schicht eine durchschnittliche Schichtdicke aufweist von 0,001 mm bis 10 mm.

7. Batteriesystem nach einem der vorhergehenden Ansprüche, **dadurch gekennzeichnet, dass** die durchstoßfeste Schicht mindestens beständig ist gegen Temperaturen von bis zu 200°C.

8. Batteriesystem nach einem der vorhergehenden Ansprüche, **dadurch gekennzeichnet, dass** die durchstoßfeste Schicht eine Folie, Fasern, ein Gewebe oder einen Verbundwerkstoff umfasst oder daraus besteht.

9. Kraftfahrzeug umfassend ein Batteriesystem nach einem der Ansprüche 1 bis 8.

## Claims

1. Battery system with an increased puncture resistance, comprising:
i) one or more battery cells; and
ii) a puncture-resistant layer which partially or completely surrounds at least one battery cell, **characterized**
**in that** the puncture-resistant layer contains or consists of aramides and/or polyethylene polymers containing ≥ 100,000 ethylene groups, wherein the puncture-resistant layer has a tensile strength of ≥ 500 N/mm².

2. Battery system according to Claim 1, **characterized in that** the puncture-resistant layer partially or completely surrounds one, a plurality of or all of the battery cells of the battery system.

3. Battery system according to either of the preceding claims, **characterized in that** the battery system has one or more housings for accommodating one or more battery cells, wherein the puncture-resistant layer is arranged inside, outside or both inside and outside the housing or housings.

4. Battery system according to one of the preceding claims, **characterized in that** the puncture-resistant layer has a modulus of elasticity of ≥ 25 kN/mm².

5. Battery system according to one of the preceding claims, **characterized in that** the puncture-resistant layer has a surface density of ≤ 5 kg/m².

6. Battery system according to one of the preceding claims, **characterized in that** the puncture-resistant layer has an average layer thickness of from 0.001 mm to 10 mm.

7. Battery system according to one of the preceding claims, **characterized in that** the puncture-resistant layer is at least resistant to temperatures of up to 200°C.

8. Battery system according to one of the preceding claims, **characterized in that** the puncture-resistant layer comprises or consists of a film, fibres, a woven fabric or a composite material.

9. Motor vehicle comprising a battery system according to one of Claims 1 to 8.

## Revendications

1. Système de batterie présentant une résistance accrue à la perforation, comprenant :
i) un ou plusieurs éléments de batterie ; et
ii) une couche résistante à la perforation entourant partiellement ou entièrement au moins un élément de batterie,
**caractérisé en ce que** la couche résistante à la perforation contient des polymères d'aramide et/ou de polyéthylène comportant ≥ 100 000 groupes éthylène, ou est constituée de ceux-ci,
dans lequel la couche résistante à la perforation présente une résistance à la traction de ≥ 500 N/mm².

2. Système de batterie selon la revendication 1, **caractérisé en ce que** la couche résistante à la perforation entoure partiellement ou entièrement un, plusieurs ou la totalité des éléments de batterie du système de batterie.

3. Système de batterie selon l'une des revendications précédentes, **caractérisé en ce que** le système de batterie comprend un ou plusieurs boîtiers destinés à loger un ou plusieurs éléments de batterie, dans lequel la couche résistante à la perforation est disposée à l'intérieur, à l'extérieur ou à la fois à l'intérieur et à l'extérieur du ou des boîtiers.

4. Système de batterie selon l'une des revendications précédentes, **caractérisé en ce que** la couche résistante à la perforation présente un module d'élasticité de ≥ 25 kN/mm².

5. Système de batterie selon l'une des revendications précédentes, **caractérisé en ce que** la couche résistante à la perforation présente une densité surfacique de ≤ 5 kg/m².

6. Système de batterie selon l'une des revendications précédentes, **caractérisé en ce que** la couche résistante à la perforation présente une épaisseur de couche moyenne comprise entre 0,001 mm et 10 mm.

7. Système de batterie selon l'une des revendications précédentes, **caractérisé en ce que** la couche résistante à la perforation est au moins résistante à des températures allant jusqu'à 200°C.

8. Système de batterie selon l'une des revendications précédentes, **caractérisé en ce que** la couche résistante à la perforation comprend un film, des fibres, un tissu ou un matériau composite ou est constituée de ceux-ci.

9. Véhicule automobile comprenant un système de batterie selon l'une des revendications 1 à 8.
